# EUROPEAN PATENT APPLICATION

(11) **EP 4 293 788 A1**
(43) Date of publication of application: **20.12.2023**
(21) Application number: 21925134.5
(22) Date of filing: 09.02.2021
(51) Int. Cl.: H01M 10/0587, H01M 10/0525, H01M 50/528

(54) **CELL AND ELECTRONIC DEVICE USING SAME**

(71) Applicant: Ningde Amperex Technology Ltd., Ningde, Fujian 352106 (CN)
(72) Inventor: YAN, Congfei, Ningde, Fujian 352106 (CN)
(74) Representative: Klunker IP Patentanwälte PartG mbB
(86) International application number: PCT/CN2021/076149
(87) International publication number: WO 2022/170451

(57) **Abstract**

A cell is provided, including an electrode assembly. The electrode assembly includes: a first electrode plate including a first current collector and a first active substance layer provided on a surface of the first current collector, where the first current collector further includes a first uncoated foil area without the first active substance layer; a second electrode plate; and a separator disposed between the first electrode plate and the second electrode plate. The electrode assembly is formed by winding the first electrode plate, the separator, and the second electrode plate in sequence. In a winding direction of the electrode assembly, each of layers from the second layer to the second outermost layer of the first electrode plate includes a first flat section, and a first bent section and a second bent section provided on two sides of the first flat section respectively. The first bent section and the second bent section are bent portions of two sides of each layer in the first electrode plate. The first uncoated foil area is provided on the first flat section. Two sides of the first uncoated foil area are connected to the first bent section and the second bent section respectively. In addition, in a length direction of the electrode assembly, the first uncoated foil area is not provided with the first active substance layer. An electric apparatus is provided, including the cell.

## Description

### TECHNICAL FIELD

This application relates to the field of battery technologies, and in particular, to a cell and an electronic apparatus using such cell.

### BACKGROUND

With the commercialization of lithium-ion batteries, requirements of the market for charging speed, temperature rise during charging and discharging, energy density, and rate discharge performance of cells are increasingly higher. Therefore, middle-tab cells have emerged.

However, a current common middle-tab cell mainly has the following structures: One structure is that a tab groove that exposes a blank current collector is provided in an active substance layer of a tab, and the tab is fixed in the tab groove. However, in a cell with a width smaller than 30 mm, there is a problem that groove positions of anode and cathode tabs overlap each other. The groove positions overlapping each other leads to an inconsistent thickness of the cell. In addition, lithium precipitation at the groove positions further causes deterioration in cycling, resulting in poor remaining cycling capacity, cycling swelling, or the like. Another structure is that an electrode plate is provided with a tab groove. However, in a width direction of the electrode plate, width of the tab groove is slightly larger than that of a short groove at a fixed end of the tab. The groove is prone to lithium precipitation. In addition, such area uncoated with an active substance causes lithium precipitation in an area of a cathode plate corresponding to an anode tab groove. To prevent lithium precipitation in this area, it is necessary to apply an insulation adhesive on the cathode plate corresponding to the anode tab groove to prevent release of lithium ions. At least two protection tape layers are usually provided on the anode tab, so that the thickness of the cell increases.

Persons skilled in the art should consider how to resolve the above problems.

### SUMMARY

There is an objective to resolve problems of lithium precipitation, and uneven thickness and low energy density of a cell caused by provision of a tab groove in the prior art.

An embodiment of this application provides a cell including an electrode assembly. The electrode assembly includes: a first electrode plate including a first current collector and a first active substance layer provided on a surface of the first current collector, where the first current collector further includes a first uncoated foil area without the first active substance layer; a second electrode plate including a second current collector and a second active substance layer provided on a surface of the second current collector, where the second current collector further includes a second uncoated foil area without the second active substance layer; and a separator disposed between the first electrode plate and the second electrode plate. The electrode assembly is formed by winding the first electrode plate, the separator, and the second electrode plate in sequence. In a winding direction of the electrode assembly, each of layers from the second layer to the second outermost layer of the first electrode plate includes a first flat section, and a first bent section and a second bent section provided on two sides of the first flat section respectively. The first bent section and the second bent section are bent portions of two sides of each layer in the first electrode plate. The first uncoated foil area is provided on the first flat section. Two sides of the first uncoated foil area are connected to the first bent section and the second bent section respectively. In addition, in a length direction of the electrode assembly, the first uncoated foil area is not provided with the first active substance layer.

In a possible implementation, in a winding direction of the electrode assembly, each of layers from the second layer to the second outermost layer of the second electrode plate includes a second flat section, and a third bent section and a fourth bent section provided on two sides of the second flat section respectively. The third bent section and the fourth bent section are bent portions of two sides of each layer in the second electrode plate. The second uncoated foil area is provided on the second flat section. Two sides of the second uncoated foil area are connected to the third bent section and the fourth bent section respectively. In addition, in the length direction of the electrode assembly, the second uncoated foil area is not provided with the second active substance layer.

In a possible implementation, another surface of the first current collector opposite the first uncoated foil area is provided with the first active substance layer; or another surface of the second current collector opposite the second uncoated foil area is provided with the second active substance layer.

In a possible implementation, in a width direction of the electrode assembly, a distance between a central symmetry line of the first uncoated foil area or the second uncoated foil area and a central symmetry line of the electrode assembly is smaller than or equal to 2 mm.

In a possible implementation, the first uncoated foil area is provided opposite the second uncoated foil area.

In a possible implementation, in the width direction of the electrode assembly, the two sides of the first uncoated foil area respectively exceed beyond two sides of the second uncoated foil area corresponding to the two sides of the first uncoated foil area by a width of 0 to 4 mm.

In a possible implementation, the electrode assembly further includes a first tab electrically connected to the first uncoated foil area, a second tab electrically connected to the second uncoated foil area, a first insulation layer, and a second insulation layer. The first insulation layer is provided in the first uncoated foil area, and the second insulation layer is provided in the second uncoated foil area.

In a possible implementation, the first tab is fixed in the first uncoated foil area by welding, and the first insulation layer covers a surface of the first tab; or the second tab is fixed in the second uncoated foil area by welding, and the second insulation layer covers a surface of the second tab.

In a possible implementation, two surfaces of a winding start section of the first current collector are each provided with the first active substance layer, and two surfaces of a winding end section of the second current collector are each provided with the second active substance layer.

In a possible implementation, a winding start section of the second current collector includes a fifth bent section, and in a thickness direction of the electrode assembly, the fifth bent section does not overlap the winding start section of the first current collector.

In a possible implementation, surfaces of the first bent section and the second bent section are provided with the first active substance layer.

In a possible implementation, a surface of the first uncoated foil area from which the first bent section and the second bent section extend is not provided with the first active substance layer.

In a possible implementation, the first flat section of the first electrode plate adjacent to the first uncoated foil area is provided with the first active substance layer.

An embodiment of this application further provides an electric apparatus. The electric apparatus includes a working module and a battery. The battery supplies electric energy to the working module, and the battery includes the cell.

As compared with the prior art, in the cell in this application, the tab and the uncoated foil area provided with the tab are provided on the flat section of the cell. That is, the tab and the uncoated foil area provided with the tab are not provided on the winding section of the cell, thereby avoiding an uneven thickness of the cell and reducing a risk of lithium precipitation in the cell. In addition, the uncoated foil area provided with the tab is a single-sided structure. Only one insulation adhesive layer needs to be attached to the uncoated foil area to cover burrs on the current collector to reduce a risk of short circuit. If a quantity of insulation adhesive layers is reduced, the thickness of the cell can be reduced. A back side of the uncoated foil area provided with the tab is provided with an active substance layer to increase energy density of the cell.

### BRIEF DESCRIPTION OF DRAWINGS

FIG. 1 is a schematic structural diagram of a cell according to an embodiment of this application;
FIG. 2 is a partially enlarged schematic diagram of a first uncoated foil area of a cell according to an embodiment of this application;
FIG. 3 is a partially enlarged schematic diagram of a second uncoated foil area of a cell according to an embodiment of this application;
FIG. 4 is a schematic planar diagram of a front side and a back side of a first uncoated foil area of a cell according to an embodiment of this application;
FIG. 5 is a schematic planar diagram of a front side and a back side of a second uncoated foil area of a cell according to an embodiment of this application;
FIG. 6 is a partially enlarged schematic diagram of a first uncoated foil area of a cell according to another embodiment of this application;
FIG. 7 is a partially enlarged schematic diagram of a second uncoated foil area of a cell according to another embodiment of this application;
FIG. 8 is a partially enlarged schematic diagram of a first uncoated foil area of a cell according to still another embodiment of this application;
FIG. 9 is a partially enlarged schematic diagram of a second uncoated foil area of a cell according to still another embodiment of this application; and
FIG. 10 is a schematic diagram of an electronic apparatus according to an embodiment of this application.

**Reference signs of main components:**

| | |
|---|---|
| cell | 1 |
| electrode assembly | 10 |
| first electrode plate | 11 |
| first uncoated foil area | 110 |
| first current collector | 111 |
| first active substance layer | 112 |
| first flat section | 113 |
| first bent section | 114 |
| second bent section | 115 |
| second electrode plate | 12 |
| second uncoated foil area | 120 |
| second current collector | 121 |
| fifth bent section | 1210 |
| third uncoated foil area | 1211 |
| second active substance layer | 122 |
| second flat section | 123 |
| third bent section | 124 |
| fourth bent section | 125 |
| separator | 13 |
| first tab | 15 |
| second tab | 16 |
| first insulation layer | 17 |
| second insulation layer | 18 |
| electronic apparatus | 100 |
| working module | 101 |
| battery | 102 |

This application is further described with reference to the accompanying drawings in the following specific embodiments.

### DESCRIPTION OF EMBODIMENTS

Contents of this application are more comprehensively described below with reference to the accompanying drawings. Example embodiments of this application are shown in the accompanying drawings. However, this application may be implemented in many different manners and should not be construed as being limited to the example embodiments illustrated herein. These example embodiments are provided in order to clearly and completely describe this application, and to fully convey the scope of this application to persons skilled in the art. Similar reference signs indicate the same or similar components.

Terms used herein are only for the purpose of describing specific example embodiments, and are not intended to limit this application. As used herein, unless otherwise clearly stated in the context, singular forms as described by "a/an", "one", and "this" are intended to also include plural forms. In addition, when used in this specification, "include" and/or "comprise" and/or "have" refer to the presence of integers, steps, operations, and/or components, but does not exclude the presence or addition of one or more other features, areas, integers, steps, operations, components, and/or groups thereof.

Unless otherwise defined, all terms (including technical and scientific terms) used herein have the same meanings as commonly understood by persons of ordinary skills in the art to which this application pertains. In addition, unless otherwise clearly defined herein, terms defined in a general dictionary should be construed as having the same meanings as in related technologies and content of this application, and shall not be construed as to have idealized or extremely formal meanings.

The following content describes the example embodiments with reference to the accompanying drawings. It should be noted that components illustrated in the reference drawings are not necessarily illustrated to scale; and the same or similar reference signs or similar technical terms are used for the same or similar components.

The specific embodiments of this application are further described in detail below with reference to the accompanying drawings.

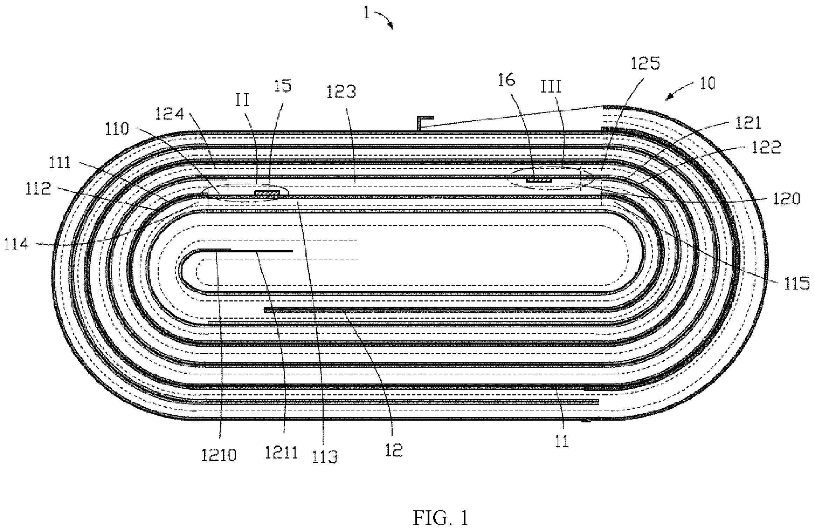

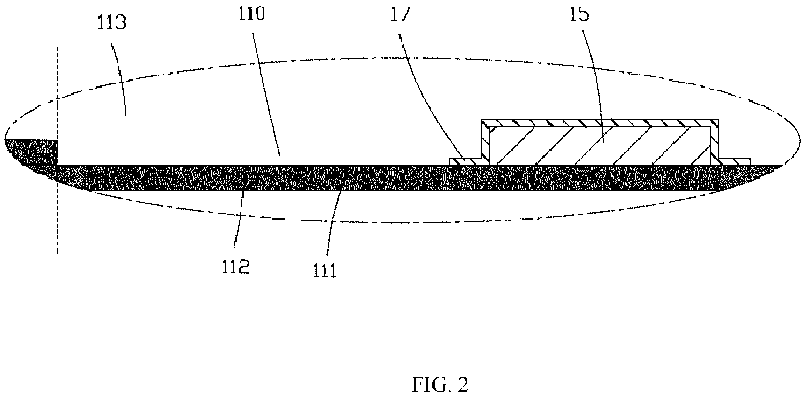

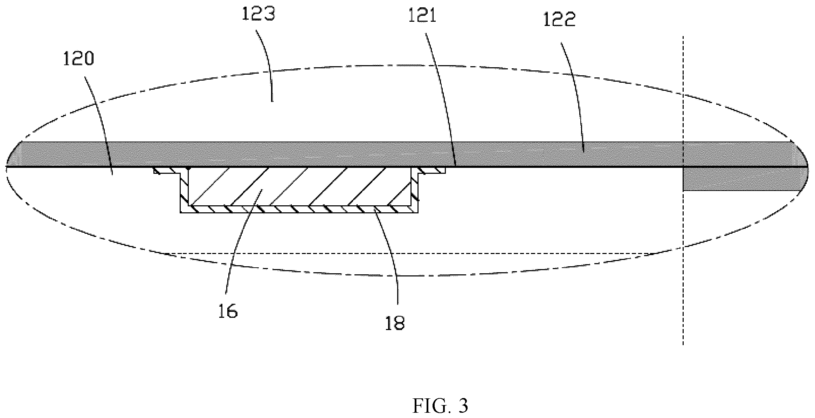

FIG. 1 is a schematic structural diagram of a cell 1 according to an embodiment of this application. FIG. 2 is a partially enlarged schematic diagram of a first uncoated foil area 110 of a cell 1 according to an embodiment of this application. FIG. 3 is a partially enlarged schematic diagram of a second uncoated foil area 120 of a cell 1 according to an embodiment of this application.

The cell 1 includes an electrode assembly 10, where the electrode assembly 10 includes a first electrode plate 11, a second electrode plate 12, and a separator 13. The first electrode plate 11 includes a first current collector 111 and a first active substance layer 112 provided on a surface of the first current collector 111. The first current collector 111 further includes a first uncoated foil area 110 without the first active substance layer 112. The second electrode plate 12 includes a second current collector 121 and a second active substance layer 122 provided on a surface of the second current collector 121, and the second current collector 121 further includes a second uncoated foil area 120 without the second active substance layer 122. The separator 13 is disposed between the first electrode plate 11 and the second electrode plate 12.

The electrode assembly 10 is formed by stacking and then winding the first electrode plate 11, the separator 13, and the second electrode plate 12 in sequence.

In an embodiment, during a winding process, the first electrode plate 11 and the second electrode plate 12 are spaced apart, and the separator 13 is disposed between the first electrode plate 11 and the second electrode plate 12 to isolate the first electrode plate 11 and the second electrode plate 12, so as to avoid a short circuit caused by contact between the first electrode plate 11 and the second electrode plate 12.

In a winding direction of the electrode assembly 10, each of layers from the second layer to the second outermost layer of the first electrode plate 11 includes a first flat section 113, and a first bent section 114 and a second bent section 115 provided on two sides of the first flat section 113 respectively. The first bent section 114 and the second bent section 115 are bent portions of two sides of each layer in the first electrode plate 11. The first uncoated foil area 110 is provided on the first flat section 113. Two sides of the first uncoated foil area 110 are connected to the first bent section 114 and the second bent section 115 respectively. In addition, in a length direction of the electrode assembly 10, the first uncoated foil area 110 is not provided with the first active substance layer 112.

In an embodiment, each of layers from the second layer to the second outermost layer of the first electrode plate 11 includes a first flat section 113. The first flat section 113 is a portion of the cell 1 that extends horizontally during the winding process and does not bend due to the winding of the cell 1. The first bent section 114 and the second bent section 115 provided on two sides of the first flat section 113 respectively are portions of the first electrode plate 11 that bend during a winding process of the cell 1 to implement the winding of the cell 1. Thickness of the first electrode plate 11 at the first uncoated foil area 110 is smaller than that of the first electrode plate 11 adjacent to the first uncoated foil area 110. The first uncoated foil area 110 is provided at the first flat section 113, avoiding an uneven thickness of the cell 1 caused by extension of a portion of the first electrode plate 11 with a smaller thickness into a winding bent zone.

In an embodiment, the first uncoated foil area 110 is provided on at least one first flat section 113, and two sides of the first uncoated foil area 110 may be connected to one first bent section 114 and one second bent section 115 respectively, so that the first uncoated foil area 110 may occupy one first flat section 113. In another embodiment, surfaces of the first bent section 114 and the second bent section 115 are provided with the first active substance layer 112. A surface of the first uncoated foil area 110 from which the first bent section 114 and the second bent section 115 extend is not provided with the first active substance layer 112. In another embodiment, the first flat section 113 of the first electrode plate 11 adjacent to the first uncoated foil area 110 is provided with the first active substance layer 112.

In a winding direction of the electrode assembly 10, each of layers from the second layer to the second outermost layer of the second electrode plate 12 includes a second flat section 123, and a third bent section 124 and a fourth bent section 125 provided on two sides of the second flat section 123 respectively. The third bent section 124 and the fourth bent section 125 are bent portions of two sides of each layer in the second electrode plate 12. The second uncoated foil area 120 is provided on the second flat section 123. Two sides of the second uncoated foil area 120 are connected to the third bent section 124 and the fourth bent section 125 respectively. In addition, in the length direction of the electrode assembly 10, the second uncoated foil area 120 is not provided with the second active substance layer 122.

In an embodiment, each of layers from the second layer to the second outermost layer of the second electrode plate 12 includes a second flat section 123. The second flat section 123 is a portion of the cell 1 that extends horizontally during the winding process and that does not bend due to the winding of the cell 1. The third bent section 124 and the fourth bent section 125 provided on two sides of the second flat section 123 respectively are portions of the second electrode plate 12 that bend during the winding process of the cell 1 to implement the winding of the cell 1. A thickness of the second electrode plate 12 at the second uncoated foil area 120 is smaller than that of the second electrode plate 12 adjacent to the second uncoated foil area 120. The second uncoated foil area 120 is provided at the second flat section 123, avoiding an uneven thickness of the cell 1 caused by extension of a portion of the second electrode plate 12 with a smaller thickness into a winding bent zone.

In an embodiment, the second uncoated foil area 120 is provided on at least one second flat section 123, and the two sides of the second uncoated foil area 120 may be connected to one third bent section 124 and one fourth bent section 125 respectively, so that the second uncoated foil area 120 may occupy one second flat section 123. In another embodiment, surfaces of the third bent section 124 and the fourth bent section 125 are provided with the second active substance layer 122. A surface of the second uncoated foil area 120 from which the third bent section 124 and the fourth bent section 125 extend is not provided with the second active substance layer 122. In another embodiment, the second flat section 123 of the second electrode plate 12 adjacent to the second uncoated foil area 120 is provided with the second active substance layer 122.

The first uncoated foil area 110 is provided opposite the second uncoated foil area 120. In an embodiment, the first uncoated foil area 110 and the second uncoated foil area 120 are respectively provided on the first electrode plate 11 and the second electrode plate 12 adjacent to each other. The first uncoated foil area 110 faces the second uncoated foil area 120, and the second uncoated foil area 120 also faces the first uncoated foil area 110, so that the first uncoated foil area 110 without the first active substance layer 112 corresponds to the second uncoated foil area 120 without the second active substance layer 122, avoiding problems of an uneven thickness of the cell and lithium precipitation caused by misalignment.

In an embodiment, in a width direction of the electrode assembly 10, a distance between a central symmetry line of the first uncoated foil area 110 or the second uncoated foil area 120 and a central symmetry line of the electrode assembly 10 is smaller than or equal to 2 mm. That is, the first uncoated foil area 110 and the second uncoated foil area 120 are provided in the middle area of the cell 1, thereby improving flatness of the cell 1.

In the width direction of the electrode assembly 10, the two sides of the first uncoated foil area 110 respectively exceed beyond two sides of the second uncoated foil area 120 corresponding to the two sides of the first uncoated foil area 110 by a width of 0 to 4 mm. In an embodiment, the first electrode plate 11 may be a cathode of the cell 1, and the second electrode plate 12 may be an anode of the cell 1. Edges of the two sides of the first uncoated foil area 110 respectively extend beyond edges of the corresponding two sides of the second uncoated foil area 120, which can avoid lithium precipitation on electrodes, thereby improving safety performance of the cell 1.

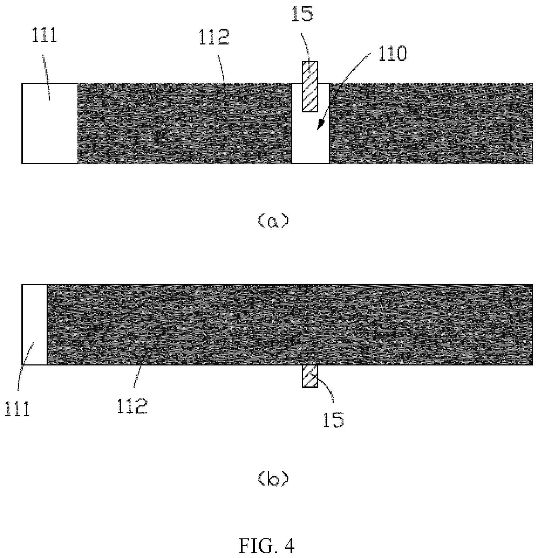

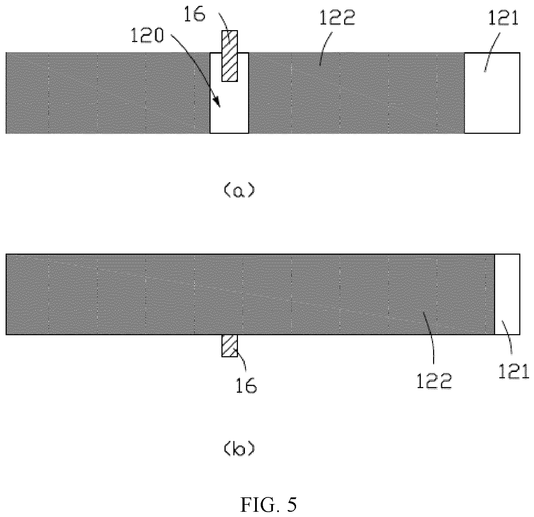

Refer to FIG. 4 and FIG. 5. FIG. 4 is a schematic planar diagram of a front side and a back side of a first uncoated foil area 110 of a cell 1 according to an embodiment of this application. FIG. 5 is a schematic planar diagram of a front side and a back side of a second uncoated foil area 120 of a cell 1 according to an embodiment of this application.

Another surface of the first current collector 111 opposite the first uncoated foil area 110 is provided with the first active substance layer 112; or another surface of the second current collector 121 opposite the second uncoated foil area 120 is provided with the second active substance layer 122. In an embodiment, a back side of the first uncoated foil area 110 and a back side of the second uncoated foil area 120 are provided with the first active substance layer 112 and the second active substance layer 122 respectively. That is, the first uncoated foil area 110 and the second uncoated foil area 120 are each provided with an active substance layer on a single side, so that a thickness of a portion of the first electrode plate 11 provided with the first uncoated foil area 110 and a thickness of a portion of the second electrode plate 12 provided with the second uncoated foil area 120 have less impact on the overall thickness uniformity of the cell 1 during the winding or stacking process compared to a thickness of a conventional uncoated foil area provided with grooves on both sides. In addition, the first active substance layer 112 is provided on the back side of the first uncoated foil area 110 corresponding to the first electrode plate 11, and the second active substance layer 122 is provided on the back side of the second uncoated foil area 120 corresponding to the second electrode plate 12. This increases a total amount of the active substances in the cell 1, so that the energy density of the cell 1 is further increased while a volume remains unchanged.

In an embodiment, in the length direction of the electrode assembly 10, the first uncoated foil area 110 is not provided with the first active substance layer 112, and in the length direction of the electrode assembly 10, the second uncoated foil area 120 is not provided with the second active substance layer 122. That is, opposite sides of the first uncoated foil area 110 and opposite sides of the second uncoated foil area 120 extend to the edges of the first current collector 111 and the second current collector 121 respectively. Both the first uncoated foil area 110 and the second uncoated foil area 120 have openings on both sides. This provides a complete stress release window for swelling of the first electrode plate 11 and the second electrode plate 12 in an electrochemical cycle.

The electrode assembly 10 further includes a first tab 15 electrically connected to the first uncoated foil area 110, a second tab 16 electrically connected to the second uncoated foil area 120, a first insulation layer 17, and a second insulation layer 18. The first insulation layer 17 is provided in the first uncoated foil area 110, and the second insulation layer 18 is provided in the second uncoated foil area 120. The first tab 15 is fixed in the first uncoated foil area 110 by welding, and the first insulation layer 17 covers at least a surface of the first tab 15. The second tab 16 is fixed in the second uncoated foil area 120 by welding, and the second insulation layer 18 covers at least a surface of the second tab 16.

In an embodiment, the first current collector 111 and the second current collector 121 may be made of materials such as copper foil and aluminum foil with good conductivity and ductility. The first tab 15 may be fixed to and electrically connected to the first current collector 111 by resistance welding, ultrasonic welding, laser welding, conductive adhesive bonding, and other methods. The second tab 16 may also be fixed to and electrically connected to the first current collector 111 by resistance welding, ultrasonic welding, laser welding, conductive adhesive bonding, and other methods. The first insulation layer 17 is provided in the first uncoated foil area 110 and covers at least the first tab 15 and a connection area between the first tab 15 and the first current collector 111 to cover at least burrs that may appear when the first tab 15 is connected to the first current collector 111, thereby avoiding short circuit of the cell 1. The second insulation layer 18 is provided in the second uncoated foil area 120 and covers at least the second tab 16 and a connection area between the second tab 16 and the second current collector 121 to cover at least the burrs that may appear when the second tab 16 is connected to the second current collector 121, thereby avoiding the short circuit of the cell 1.

In this embodiment, as shown in FIG. 2 and FIG. 3, the first insulation layer 17 may cover only the first tab 15 and a welding area between the first tab 15 and the first current collector 111. The second insulation layer 18 may cover only the second tab 16 and a welding area between the second tab 16 and the second current collector 121.

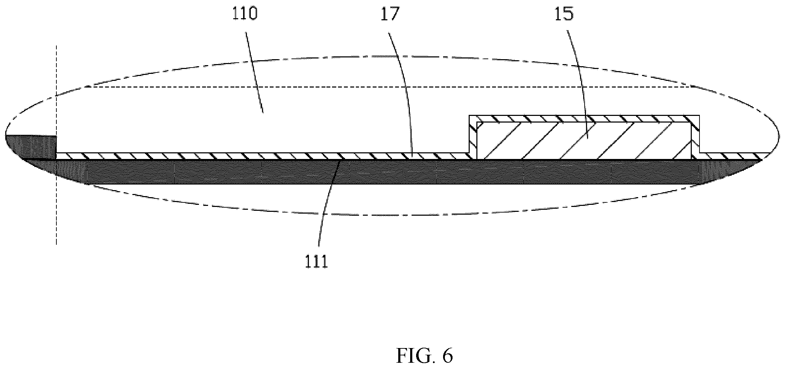

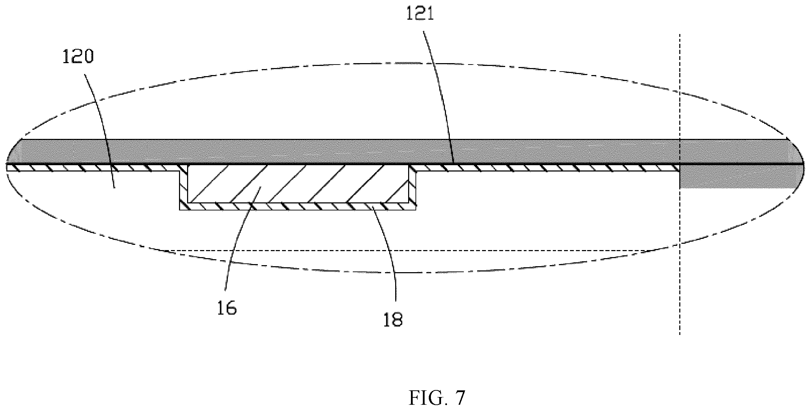

In another embodiment, as shown in FIG. 6 and FIG. 7, the first insulation layer 17 covers the first tab 15 and other areas without the first tab 15 on the surface of the first current collector 111 corresponding to the first uncoated foil area 110. The second insulation layer 18 can cover the second tab 16 and other areas without the second tab 16 on the surface of the second current collector 121 corresponding to the second uncoated foil area 120.

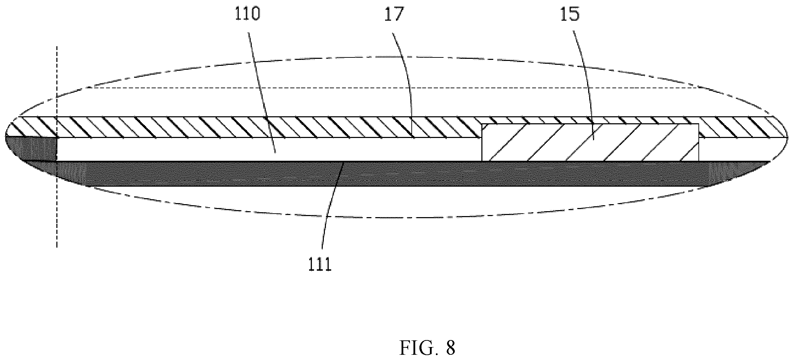

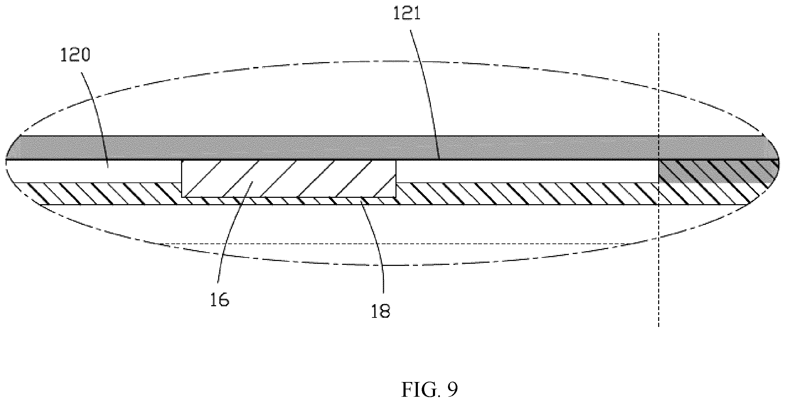

In another embodiment, as shown in FIG. 8 and FIG. 9, the first insulation layer 17 covers the first uncoated foil area 110 and the first tab 15. Two ends of the first insulation layer 17 may lap the first active substance layer 112 on the surface to cover the first uncoated foil area 110. The second insulation layer 18 covers the second uncoated foil area 120 and the second tab 16. Two ends of the second insulation layer 18 may lap the second active substance layer 122 on the surface to cover the second uncoated foil area 120.

In an embodiment, two surfaces of a winding start section of the first current collector 111 are each provided with the first active substance layer 112, and two surfaces of a winding end section of the second current collector 121 are each provided with the second active substance layer 122.

In an embodiment, the winding start section of the second current collector 121 includes a fifth bent section 1210. In the thickness direction of the electrode assembly 10, the fifth bent section 1210 does not overlap the winding start section of the first current collector 111.

In an embodiment, the winding start section of the second electrode plate 12 may alternatively be provided with a third uncoated foil area 1211. The third uncoated foil area 1211 is connected to the fifth bent section 1210. The fifth bent section 1210 may be a pre-bent structure. The fifth bent section 1210 is further connected to a flat section of the second electrode plate 12. The fifth bent section 1210 may face a winding center of the cell 1. A length of the third uncoated foil area 1211 may be smaller than half of a width of the winding center. In the thickness direction of the electrode assembly 10, the fifth bent section 1210 does not overlap the winding start section of the first current collector 111 to prevent a single-sided zone of the first electrode plate 11 from bending. In addition, the pre-bent fifth bent section 1210 may be used to compensate for a thickness difference of the cell 1, so that the thickness of the cell 1 is more even.

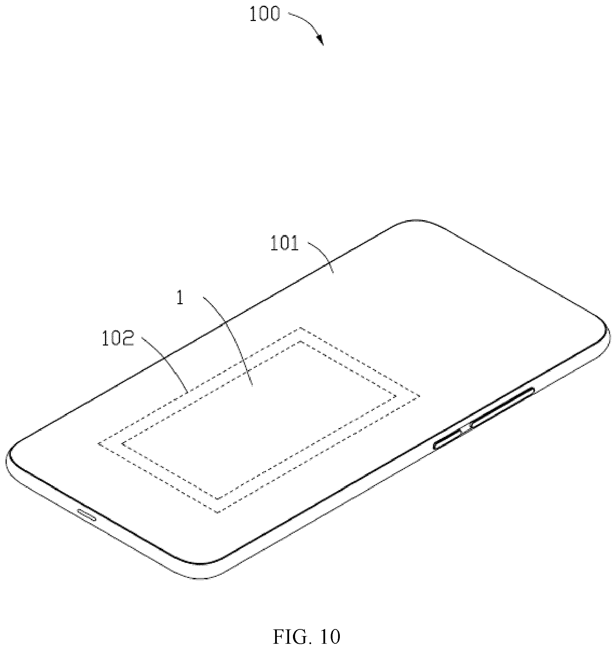

FIG. 10 is a schematic diagram of an electronic apparatus 100 according to an embodiment of this application. This application further provides an electronic apparatus 100. The electronic apparatus includes a working module 101 and a battery 102. The battery 102 supplies electric energy to the working module 101, and the battery 102 includes the cell 1. In FIG. 10, a mobile phone is only used as an example of the electronic apparatus 100. In another embodiment, the electronic apparatus 100 may alternatively be a personal computer, smart home appliance, an industrial controller, an electric vehicle, a hybrid vehicle, or the like.

The specific embodiments of this application are described above with reference to the accompanying drawings. However, persons of ordinary skill in the art can understand that various changes and replacements can still be made to the specific embodiments of this application without departing from the spirit and scope of this application. These changes and replacements fall within the scope of this application.

## Claims

1. A cell, comprising an electrode assembly, wherein the electrode assembly comprises:
a first electrode plate comprising a first current collector and a first active substance layer provided on a surface of the first current collector, wherein the first current collector further comprises a first uncoated foil area without the first active substance layer;
a second electrode plate comprising a second current collector and a second active substance layer provided on a surface of the second current collector, wherein the second current collector further comprises a second uncoated foil area without the second active substance layer; and
a separator disposed between the first electrode plate and the second electrode plate; and
the electrode assembly is formed by winding the first electrode plate, the separator, and the second electrode plate in sequence; wherein
in a winding direction of the electrode assembly, each of layers from the second layer to the second outermost layer of the first electrode plate comprises a first flat section, and a first bent section and a second bent section provided on two sides of the first flat section respectively; the first bent section and the second bent section are bent portions of two sides of each layer in the first electrode plate; the first uncoated foil area is provided on the first flat section; two sides of the first uncoated foil area are connected to the first bent section and the second bent section respectively; and in a length direction of the electrode assembly, the first uncoated foil area is not provided with the first active substance layer.

2. The cell according to claim 1, wherein in the winding direction of the electrode assembly, each of layers from the second layer to the second outermost layer of the second electrode plate comprises a second flat section, and a third bent section and a fourth bent section provided on two sides of the second flat section respectively; the third bent section and the fourth bent section are bent portions of two sides of each layer in the second electrode plate; the second uncoated foil area is provided on the second flat section; two sides of the second uncoated foil area are connected to the third bent section and the fourth bent section respectively; and in the length direction of the electrode assembly, the second uncoated foil area is not provided with the second active substance layer.

3. The cell according to claim 1, wherein another surface of the first current collector opposite to the first uncoated foil area is provided with the first active substance layer; or another surface of the second current collector opposite the second uncoated foil area is provided with the second active substance layer.

4. The cell according to claim 1, wherein in a width direction of the electrode assembly, a distance between a central symmetry line of the first uncoated foil area or the second uncoated foil area and a central symmetry line of the electrode assembly is smaller than or equal to 2 mm.

5. The cell according to claim 1, wherein the first uncoated foil area is opposite to the second uncoated foil area.

6. The cell according to claim 5, wherein in a width direction of the electrode assembly, the two sides of the first uncoated foil area respectively exceed beyond two sides of the second uncoated foil area corresponding to the two sides of the first uncoated foil area by a width of 0 to 4 mm.

7. The cell according to claim 1, wherein the electrode assembly further comprises a first tab electrically connected to the first uncoated foil area, a second tab electrically connected to the second uncoated foil area, a first insulation layer, and a second insulation layer, wherein the first insulation layer is provided in the first uncoated foil area, and the second insulation layer is provided in the second uncoated foil area.

8. The cell according to claim 7, wherein the first tab is fixed in the first uncoated foil area by welding, and the first insulation layer covers a surface of the first tab; or the second tab is fixed in the second uncoated foil area by welding, and the second insulation layer covers a surface of the second tab.

9. The cell according to claim 1, wherein two surfaces of a winding start section of the first current collector are each provided with the first active substance layer, and two surfaces of a winding end section of the second current collector are each provided with the second active substance layer.

10. The cell according to claim 1, wherein a winding start section of the second current collector comprises a fifth bent section, and in a thickness direction of the electrode assembly, the fifth bent section does not overlap the winding start section of the first current collector.

11. The cell according to claim 1, wherein surfaces of the first bent section and the second bent section are provided with the first active substance layer.

12. The cell according to claim 11, wherein a surface of the first uncoated foil area from which the first bent section and the second bent section extend is not provided with the first active substance layer.

13. The cell according to claim 1, wherein the first flat section of the first electrode plate adjacent to the first uncoated foil area is provided with the first active substance layer.

14. An electric apparatus, wherein the electric apparatus comprises a working module and a battery, wherein the battery supplies electric energy to the working module, and the battery comprises the cell according to any one of claims 1 to 13.
